# EUROPEAN PATENT APPLICATION

(11) **EP 1 502 800 A1**
(43) Date of publication of application: **02.02.2005**
(21) Application number: 04103703.7
(22) Date of filing: 30.07.2004
(51) Int. Cl.: B60K 17/16

(54) **Limited slip differential assembly**

(30) Priority: 01.08.2003 US 631714
(71) Applicant: DANA CORPORATION, Toledo, OH 43615 (US)
(72) Inventor: Krisher, James A., Indiana, 46845 (US); Catalano, Micheal J., Ohio 43617 (US)
(74) Representative: Jorio, Paolo, Dr. Ing.

(57) **Abstract**

An electronically controlled front wheel drive limited slip differential assembly that is designed to allow an operator to manually or automatically control the limited slip function. The differential control and actuation assembly is located external to the front transaxle (2) and differential case (1). The assembly includes an electric solenoid (5) that modulates hydraulic pressure produced by a gerotor pump (6). When the limited slip differential control is in the ON position, hydraulic pressure produced by the gerotor pump engages a friction clutch pack (8), which couples the differential case (1) to the front axle output shaft (9). When the limited slip function is in the OFF position, the electrical solenoid (5) does not allow the gerotor pump (6) to generate sufficient hydraulic pressure to actuate the clutch pack (8). When the differential control is in an intermediate position, the specific control setting, and the rotational speed of the front axle output shaft (9) relative to the rotational speed of the differential case (1) determine differential engagement. In addition to the ability to manually control the limited slip function, a computer processor/logic unit (13) can also electronically control the function.

## Description

### BACKGROUND OF THE INVENTION

### 1. Field of the Invention

The present invention relates to limited slip differential assemblies for motor vehicles.

### 2. Description of the Prior Art

Differentials are very well known in the prior art. Differential assemblies are arranged in the power transmission system of a motor vehicle to allow a pair of output shafts operatively coupled to an input shaft to rotate at different speeds, thereby allowing the wheel associated with each output shaft to maintain traction while the vehicle is turning. The differential distributes the torque provided by the input shaft between the two output shafts. The most basic and common type of differential is known as an open differential. Although open differentials may be adequate for most driving conditions, they are generally unsuitable for slippery conditions where one wheel experiences a much lower coefficient of friction than the other wheel. If one wheel of a vehicle is located on a patch of ice or mud and the other wheel is on dry pavement, the wheel experiencing the lower coefficient of friction loses traction. If even a small amount of torque is directed to the wheel without traction, the torque will cause the wheel to "spin out". Since the maximum amount of torque which can be developed on the wheel with traction, is equal to torque on the spinning wheel without traction, the engine is unable to develop any torque and the wheel with traction is unable to rotate. To address this problem, a differential has been developed that re-allocates the torque so that the torque is directed to the wheel that has traction. Such differential assemblies are typically called limited slip differentials.

Although limited slip differentials are common options for rear wheel vehicles, they are generally rare in FWD vehicles. Designing a limited slip differential for a FWD vehicle is extremely difficult because of space limitations and economic considerations. Currently there are no active (i.e. controllable) limited slip differentials available for FWD transaxles from original equipment manufactures.

FWD vehicles typically have transaxles with open differentials. Although some high performance torque-sensing FWD limited slip differentials are commercially available, they comprise a small segment of the overall market and are prone to technical problems. Torque sensing limited slip differentials in front axle applications have historically been unsatisfactory due to excessive torque steer and handling problems, unless substantially 'detuned' to limit performance. However, given the increased emphasis on high performance FWD vehicles, there is an increasing need for a controllable limited slip differential for front transaxles.

In order to increase reliability, decrease costs, and improve performance, the present invention has been developed. In operation, the invention significantly improves FWD vehicle mobility and minimizes wheel spin, while avoiding problems with torque steer and inadequate mobility. The current invention gives FWD vehicles performance approaching that of an all wheel drive system at a fraction of the cost.

### SUMMARY OF THE INVENTION

The present invention is a limited slip differential assembly, preferably for a FWD vehicle. The invention allows an operator to manually or automatically control the limited slip function. The differential control and actuation assembly is located external to the differential housing and differential case. The assembly includes an electro-magnetic actuator, preferably an electric solenoid that modulates hydraulic pressure produced by a hydraulic pump. When the limited slip differential control is in the ON position, hydraulic pressure produced by the hydraulic pump engages a friction clutch pack, which couples the differential case to the front axle output shaft. When the limited slip function is in the OFF position, the electrical solenoid does not allow the hydraulic pump to generate sufficient hydraulic pressure to actuate the clutch pack. When the differential control is in an intermediate position, the specific control setting, and the rotational speed of the axle output shaft relative to the rotational speed of the differential case determine differential engagement. In addition to the ability to manually control the limited slip function, an alternative embodiment includes a computer processor/logic unit that can electronically control the function.

### BRIEF DESCRIPTION OF THE DRAWINGS

Figure 1 is a partial sectional drawing of the invention.
Figure 1A is a modified and enlarged partial sectional view of the invention.
Figure 2 is a schematic showing the interaction of the processor/logic unit with the solenoid, pressure relief valve, and vehicle sensors.

### DETAILED DESCRIPTION OF PREFERRED EMBODIMENTS

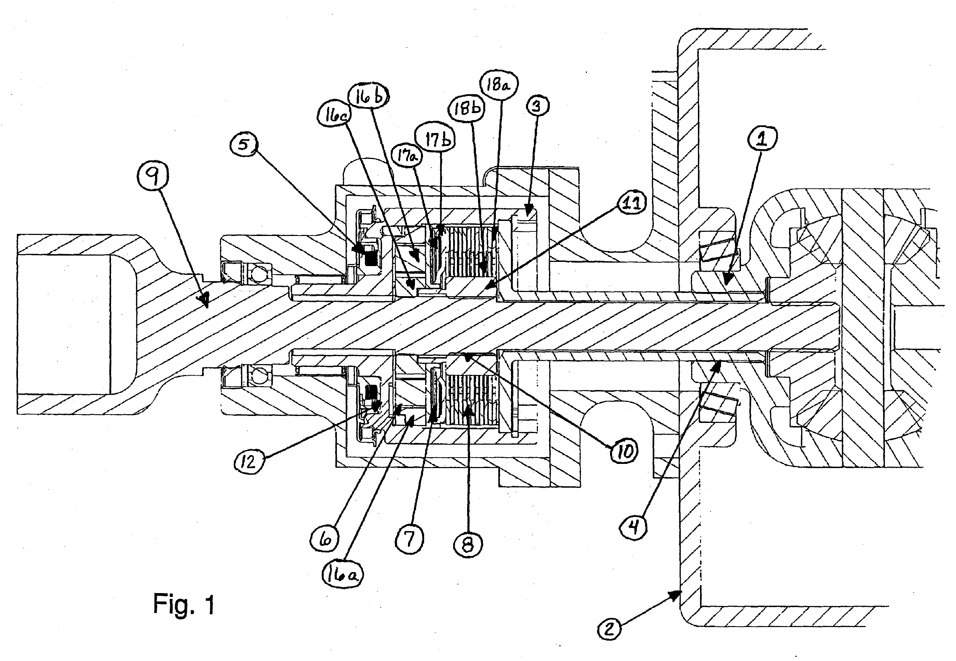

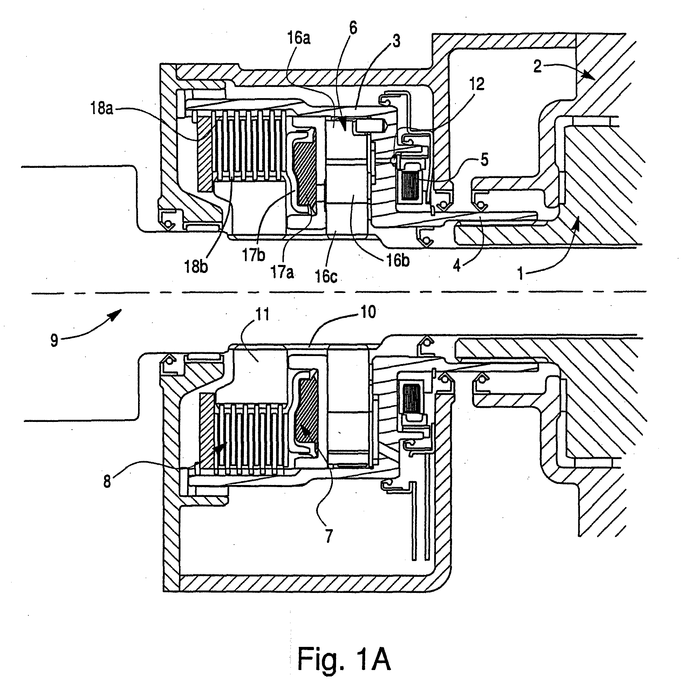

As indicated in figure 1, the invention comprises a FWD limited slip differential controller and actuation assembly. A differential case trunion extension (1) is rotatably mounted inside a FWD transaxle housing (2). The differential case trunion extension (1) is connected to a differential controller housing (3) by a differential case spline joint (4). The differential controller comprises a controllable electro-magnetic actuator (5), a hydraulic pump (6), piston assembly (7), a clutch sleeve (11) and a clutch pack assembly (8). The hydraulic pump (6) and clutch sleeve (11) are splined to an axle output shaft (9) at an axle spline joint (10).

The friction clutch pack (8) is comprised of sets of alternating outer friction plates (18a) and inner friction plates (18b). The outer circumference of the outer plates (18a) and inner friction plates (18b). The outer circumference of the outer friction plates (18a) have projections that non-rotatably engage corresponding grooves formed in the differential controller housing (3). Similarly, an inner circumference of the inner friction plates (18b) has projections that non-rotatably engage corresponding grooves formed in the clutch sleeve (11), which in turn is splined to a front axle output shaft (9). Both the outer friction plates (18a) and the inner friction plates (18b) are slideable in the axial direction. The outer clutch plates (18a) frictionally engage the inner clutch plates (18b) to form a torque coupling between the differential case (1) and the axle output shaft (9). When the clutch plates (8) are engaged, torque is transferred from the differential case (1) to the axle output shaft (9).

The clutch pack (8) is selectively actuated by a hydraulic clutch actuator system. The clutch actuator system includes a hydraulic displacement pump (6), and a piston assembly (7) for axially loading the clutch pack (8).

The hydraulic displacement pump (6) generates a selectively variable amount of hydraulic pressure to actuate the clutch pack (8). Preferably, the hydraulic displacement pump (6) is a gerotor-type pump (6). The gerotor pump (6) includes an outer ring member (16a), an outer rotor (16b), and an inner rotor (16c). The inner rotor (16c) is drivingly coupled to the output axle shaft (9), and the outer ring member (16a) is secured to the differential case (1) via the differential controller housing (3) spline joint (4). The inner rotor (16c) has one less tooth than the outer rotor (16b) and when the inner rotor (16c) is driven, it will drive the outer rotor (16b), which can freely rotate within the outer ring member (16a) eccentrically with respect to the inner rotor (16c), thus providing a series of decreasing and increasing volume fluid pockets by means of which fluid pressure is created. As a result, when relative motion takes place between differential case (1) and the axle output shaft (9), the inner rotor (16c) of the gerotor pump (6) generates hydraulic fluid pressure. Consequently, the hydraulic pressure generated by the pump (6) is substantially proportional to a rotational speed difference between the output axle (9) and the differential case (1).

Although a gerotor pump is specifically discussed, any type of hydraulic pump functionally capable of generating hydraulic pressure in response to the relative rotation between the specified components is within the scope of the present invention.

The piston assembly (7) serves to compress the clutch pack (8). The piston assembly (7) is comprised of a piston pressure chamber (17a) and an actuating piston (17b). The gerotor pump (6) supplies pressurized hydraulic fluid to actuate the piston assembly (7) and engage the clutch pack (8). In operation, when a speed difference between the output shaft (9) and the differential case (1) exists, the gerotor pump (6) pumps the pressurized fluid into the piston pressure chamber (17a), which causes the actuating piston (17b) to exert pressure on the clutch pack (8). As the speed difference increases, the pressure generated by the gerotor pump increases. The pressurized fluid in the piston pressure chamber (17a) exerts an axial force on the piston (17b), urging the piston (17b) to engage the clutch pack (8). Engaging the clutch pack (8) (as described above) allows torque to be transferred between the differential case (1) and the axle output shaft (9).

In order to control the fluid pressure in the piston pressure chamber (17a) and, subsequently, the output torque distribution of the limited slip differential assembly, a variable pressure relief valve assembly (12) is provided. The variable pressure relief valve may be of any configuration known in the art, but is preferably an electro-magnetic ball-and-seat valve assembly controlled by the electro-magnetic actuator (5). The electro-magnetic actuator (5) may be any appropriate electro-magnetic device known in the art, such as a solenoid.

As best illustrated in figure 1a, the solenoid (5) selectively sets the release pressure of the pressure relief valve (12) based on the magnitude of the electrical current supplied to the solenoid (5) and, subsequently, defines the magnitude of the pressure within the piston pressure chamber (17a). The solenoid is comprised of an electro-magnetic wire coil assembly that responds to varying voltages. Such solenoids are common and well known in the art.

When a maximum current is applied to the solenoid (5), the retaining force of the pressure relief valve (12) is at its maximum, and as a result, the pressure relief valve (12) allows a relatively high pressure to build in the piston pressure chamber (17a). In this configuration, the pressure is sufficient to fully actuate the hydraulic clutch pack (8), which results in fully enabling the limited slip function. This condition results when an operator manually places the differential control in the "ON" position.

When a minimum current is applied to the solenoid (5), the retaining force of the pressure relief valve (12) is at its minimum, and the relief valve (12) bleeds off hydraulic fluid at a relatively low pressure and does not allow pressure to build in the piston pressure chamber (17a). In this configuration, the pressure attainable is not sufficient to actuate the hydraulic clutch pack (8), which results in fully disabling the limited slip function. This condition results when an operator manually places the differential control in the "OFF" position.

In between the "ON" and "OFF" conditions, the release pressure of the relief valve (12) may be set at any value by modulating the current applied to the solenoid (5). Modulating the solenoid current results in a variable amount of pressure to engage, disengage, or partially engage the limited slip function. The ability to control the limited slip function enables the operator to adjust vehicle performance to match personal preferences, or to address various operating conditions and performance profiles.

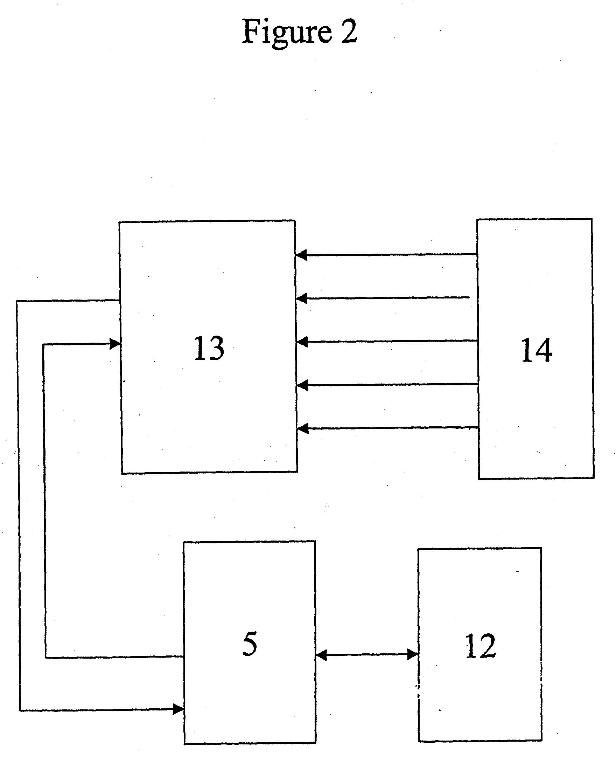

In addition to the ability to manually control the limited slip function, a computer processor/logic unit can also electronically control the function. As best shown in figure 2, the processor (13) makes control commands based on one or more vehicle sensors (14) that communicate information regarding operational parameters to the processor (13). The processor (13) may monitor parameters such as vehicle speed, wheel rotational speed, yaw rate, lateral acceleration, steering angle, engine throttle position, brake application, ice detection, moisture detection, and/or driveline configuration. The processor (13) may use a mathematical algorithm to process the sensed information and communicate the resulting electrical commands to the solenoid (5). As described supra, the solenoid selectively increases or decreases the amount of pressure exerted by the pressure relief valve (12) within a pre-determined range corresponding to the electrical current that the processor (13) directs to the solenoid (5). Information regarding the operating status of the pressure release valve (12) is subsequently communicated back to the processor (13) to allow the processor (13) to adjust and fine-tune the differential control mechanism.

One or more active vehicle management systems, such as a programmable yaw stability control system, can be used with the present invention. Active vehicle management systems may incorporate a processor (13) that can interface with the electrical solenoid (5) and pressure relief valve (12) to optimize vehicle traction, maneuverability, and stability.

For the foregoing reasons, it is clear that the invention provides a traction system for FWD vehicles. The invention may be modified in multiple ways and applied in various technological applications. The current invention may be modified and customized as required by a specific operation or application, and the individual components may be modified and defined, as required, to achieve the effect and result. Although the materials of construction are not described, they may include a variety of compositions consistent with the function of the invention. Such variations are not to be regarded as a departure from the spirit and scope of the invention, and all such modifications as would be obvious to one skilled in the art are intended to be included within the scope of the following claims.

## Claims

1. A limited slip differential assembly comprising:
a differential mechanism disposed in a differential case;
at least one output shaft drivingly coupled to said case through said differential mechanism and extending outwardly from said differential case;
a frictional clutch assembly disposed outside said differential case for selectively engaging and disengaging said differential case and said output shaft, said clutch assembly comprising at least one first member coupled to rotate with said at least one output shaft and at least one second member coupled to rotate with said differential case; and
a hydraulic clutch actuator for selectively frictionally loading said frictional clutch assembly, said actuator including a hydraulic pump for generating a hydraulic pressure to frictionally load said frictional clutch assembly;
wherein said hydraulic pump is driven by said at least one output shaft.

2. The assembly described in claim 1, wherein said assembly is installed in a front wheel drive vehicle.

3. The assembly described in claim 2, wherein said differential case is disposed in a front transaxle housing.

4. The assembly described in claim 1, wherein said first member comprises an inner clutch assembly,
said inner clutch assembly comprising inner clutch plates fixedly connected to an inner clutch sleeve,
said inner clutch sleeve being splined to said at least one shaft.

5. The assembly described in claim 1, wherein said second member comprises outer clutch plates,
said outer clutch plates being fixedly attached to said housing.

6. The assembly described in claim 1, wherein said first member is rotatably coupled to said second member such that said differential case is directly coupled to said at least one output shaft.

7. The assembly as described in claim 1, wherein said hydraulic pump is a gerotor pump.

8. The assembly as described in claim 7, wherein hydraulic pressure generated by said gerotor pump is controlled by an electro-magnetic actuator.

9. The assembly as described in claim 1, wherein said electro-magnetic actuator is an electrical solenoid.

10. The assembly as described in claim 9, wherein said electrical solenoid is controlled by adjustable controls sending a varying amount of electrical current to said solenoid.

11. The assembly as described in claim 10, wherein a pre-determined amount of electrical current directed to said electrical solenoid allows said differential case to engage said axle output shaft.

12. The assembly as described in claim 11, wherein a pre-determined amount of electrical current directed to said solenoid causes said differential case to disengage said axle out put shaft, or prevents said gerotor pump from accumulating sufficient hydraulic pressure to engage said friction clutch.

13. The assembly as described in claim 12, wherein an operator can selectively pre-set when said differential case engages said axle output shaft by adjusting electrical current directed to said solenoid.

14. The assembly as described in claim 9, wherein the current applied to said solenoid can be controlled by a computer processor.

15. The assembly as described in claim 14, wherein said computer processor receives electrical signals from a plurality of sensors, and sends electrical instructions to said solenoid to engage and disengage said differential case from said axle output shaft.

16. The assembly as described in claim 15, wherein said computer processor sends electrical instructions to said solenoid based on a mathematical algorithm.

17. A front wheel drive differential control system, said system comprising:
a front wheel drive transaxle housing,
a differential case,
a differential controller housing, said differential case being fixedly connected to said differential controller housing,
a friction clutch pack, said clutch pack being connected to said differential controller housing,
a clutch sleeve, said clutch sleeve being connected to said clutch pack,
a front axle output shaft, said output shaft being connected to said clutch sleeve,
a hydraulic pump, said hydraulic pump being connected to said axle output shaft,
a hydraulic reservoir, said hydraulic reservoir being pressurized by said hydraulic pump,
a pressure relief valve, said pressure relief valve controlling the hydraulic pressure in said hydraulic reservoir,
an electro-magnetic actuator, said actuator selectively varying the pressure exerted by said pressure relief valve,
a hydraulic piston, said hydraulic piston being urged to engage said clutch pack by hydraulic pressure in said hydraulic reservoir,
said hydraulic piston engaging said clutch pack such that said front axle output shaft is coupled to said differential case.

18. The system as described in claim 17, wherein said clutch pack, said electro-magnetic actuator, said hydraulic pump, said hydraulic piston, said hydraulic reservoir, and said pressure relief valve, are positioned external to said front transaxle housing.

19. The system as described in claim 17, wherein said clutch pack comprises:
outer frictional clutch plates, said outer clutch plates being axially movable and fixedly connected said differential controller housing,
inner frictional clutch plates, said inner clutch plates being axially movable, and rotatably connected to said outer clutch plates, said inner clutch plates being fixedly connected to said clutch sleeve.

20. The system as described in claim 17, wherein said clutch sleeve and said hydraulic pump are directly splined to said output shaft, and
said differential case is directly splined to said differential controller housing.

21. The system as described in claim 17, wherein said hydraulic pump is a gerotor pump,
said gerotor pump having an outer ring member, an outer rotor, and an inner rotor,
said outer ring member being fixedly attached to said differential controller housing,
said gerotor pump inner rotor being splined to said axle output shaft.

22. The system described in claim 17, wherein said pressure relief valve has a ball-and-seat configuration.

23. The system as described in claim 17, wherein said electro-magnetic actuator is an electrical solenoid,
said solenoid controlling said pressure relief valve such that increasing electrical current to said solenoid increases the hydraulic pressure limit of said relief valve.

24. The system as described in claim 17, wherein a pre-determined amount of electrical current directed to said electrical solenoid allows said differential case to engage said axle output shaft.

25. The system as described in claim 17, wherein a pre-determined amount of electrical current directed to said solenoid causes said differential case to disengage said axle out put shaft.

26. The system as described in claim 17, wherein an operator can selectively pre-set when said differential case engages by adjusting an electrical current directed to said solenoid.

27. The system as described in claim 17, wherein the current applied to said solenoid can be controlled by a computer processor.

28. The system as described in claim 27, wherein said computer processor receives electrical signals from a plurality of sensors, and sends electrical signals to said solenoid to engage and disengage said differential case from said axle output shaft.

29. The system as described in claim 28, wherein said computer processor sends electrical instructions to said solenoid based on a mathematical algorithm.

30. A front wheel drive differential control system, said system comprising:
a front wheel drive transaxle housing,
a differential case trunion extension,
a differential controller housing, said differential case trunion extension being splined to said differential controller housing,
outer frictional clutch plates, said outer clutch plates being axially movable and fixedly connected said differential controller housing,
inner frictional clutch plates, said inner clutch plates being axially movable, and rotatably connected to said outer clutch plates,
a clutch sleeve, said clutch sleeve being fixedly connected to said inner friction clutch plates,
a front axle output shaft, said front axle output shaft being splined to said clutch sleeve,
a gerotor hydraulic pump having an outer ring member, an outer rotor, and an inner rotor,
said gerotor pump outer ring member being fixedly attached to said differential controller housing,
said gerotor pump inner rotor being splined to said axle output shaft,
a hydraulic reservoir, said hydraulic reservoir being pressurized by said gerotor pump,
a ball-and-seat type pressure relief valve, said pressure relief valve controlling hydraulic pressure in said hydraulic reservoir,
an electrical solenoid, said solenoid selectively varying pressure exerted by said pressure relief valve,
a hydraulic piston, said hydraulic piston being urged to axially engage said inner and said outer friction clutch plates by hydraulic pressure in said hydraulic reservoir,
said hydraulic piston axially engaging said inner and outer frictional clutch plates such that said clutch plate connection comprises a torque coupling, and said front axle output shaft is coupled to said differential case trunion extension as a result of said torque coupling,
said solenoid selectively engaging said ball-and-seat pressure relief valve such that said torque coupling is selectively coupled and uncoupled,
said solenoid selectively manually controllable, and autonomously controllable by a computer processor,
said processor receiving sensor input and processing said input using a mathematical algorithm,
said processor sending electrical signals to said solenoid to optimize vehicle traction and performance.
